# EUROPEAN PATENT SPECIFICATION

(11) **EP 3 435 443 B1**
(45) Date of publication and mention of the grant of the patent: **04.09.2019**
(21) Application number: 17183037.5
(22) Date of filing: 25.07.2017
(51) Int. Cl.: H01M 2/20, H01M 10/04, H01M 10/42

(54) **BATTERY WITH A FLEXIBLE THIN FILM, THIN FILM AND METHOD OF MANUFACTURING A BATTERY**
BATTERIE MIT EINER FLEXIBLEN DÜNNSCHICHT, DÜNNSCHICHT UND VERFAHREN ZUR HERSTELLUNG EINER BATTERIE
BATTERIE AVEC UN FILM MINCE FLEXIBLE, FILM MINCE ET MÉTHODE DE FABRICATION D'UNE BATTERIE

(43) Date of publication of application: 30.01.2019
(73) Proprietor: Airbus Defence and Space GmbH, 82024 Taufkirchen (DE); Airbus Operations GmbH, 21129 Hamburg (DE)
(72) Inventor: Friedberger, Alois, 85667 Oberpframmern (DE); Linde, Peter, 21614 Buxtehude (DE); Stuhlberger, Johannes, 81369 München (DE); Rauh, Rainer, 85305 Jetzendorf (DE)
(74) Representative: Bouvier, Benjamin

(56) References cited:
- EP-A1- 2 450 995
- JP-A- 2014 130 754
- US-A1- 2015 044 527

## Description

The invention relates to batteries and in particular to compact batteries with a high ratio of energy per unit of volume. More particularly it relates to batteries adapted to be embarked on vehicles such as aircrafts for example.

The volume of a battery is an important limitation of its use in many applications. The current limitations in the energy density of the batteries induce that the volume dedicated to batteries in many applications such as mobile electronic devices or electrical vehicles remains important in regards to the total volume available for systems. In particular in vehicles such as aircrafts the volume available for the batteries is very small. Therefore, compact batteries means more space available for other functional systems, for payload volume or for embarking more batteries. Together with energy density, the compactness of batteries is therefore an essential factor in the design and industrial feasibility of electrically powered vehicles.

US2015/044527 discloses a battery comprising a flexible circuit wrapped around the top and bottom faces and a side of several cell subsets. The flexible circuit has a number of contact points all joined to anodes (or respectively all joined to cathodes) of the cell subsets. The cathodes (respectively anodes) are independently connected with tabs extending outside the sides of the battery cells.

The compactness of such battery is not optimal and requires many independent connections.

JP2014130754 discloses a battery in which an insulating film is placed between battery half cells comprising either a negative electrode layer, a negative electrode active material and a solid electrolyte layer, or a positive electrode active material and a positive electrode material. The electrical connections to the positive electrode and negative electrode are made independently by positive and negative terminals extending outside the sides of the battery stack.

The compactness of such battery is not optimal and requires many independent connections.

US 9,184,469 discloses a battery for miniaturized medical devices comprising solid state battery elements each with anodic and cathodic connectors on the same face of the battery elements, said elements being mounted in pairs back to back on opposite sides of a carrier foil. Said carrier foil comprises support sections and conductive tracks on both sides. The battery elements may be connected in series or in parallel, although the document is silent on the construction of the battery to obtain an electrical connection in parallel of the battery elements.

Such construction of a battery is not optimized in terms of compactness. In particular such construction is not very well adapted to batteries of larger dimensions.

The invention aims to provide a compact battery. It also aims at providing a multifunctional battery. The invention also aims at allowing the user to tailor the output of a battery not only at conception or manufacturing, but also during use of the battery. The invention aims at providing a safe battery, in particular a battery that would meet the aeronautics safety requirements. The invention furthermore aims at providing a battery that would be easy to manufacture and to assemble, even with a high number of single elements and functions achieved.

The invention proposes an electrical battery comprising:
- at least a battery cell comprising:
   - a separator,
   - an anode having an electrolytic face in contact with the separator and a collecting face opposite its electrolytic face,
   - a cathode having an electrolytic face in contact with the separator and a collecting face opposite its electrolytic face,
   -
   - said separator being arranged between the anode and the cathode such that the collecting face of the anode and the collecting face of the cathode are arranged on opposite sides of the separator,
- a thin film comprising:
   - at least one electrically isolating layer,
   - at least one anode contact adapted to electrically contact the anode,
   - at least one cathode contact adapted to electrically contact the cathode,
characterized in that the thin film is:
- at least partially flexible,
- bent between the anode contact and the cathode contact so as to ensure an electrical contact simultaneously:
   - between the anode contact and the collecting face of the anode, and
   - between the cathode contact and the collecting face of the cathode.

In the whole text, the term 'electrode' is used as a standard denomination for anode or cathode, therefore applying to the anode and/or the cathode.

The separator is adapted to and arranged between the anode and the cathode to permit the passage of electrically charged particles between the anode and the cathode while preventing the passing of electrons between the anode and the cathode. In most battery cells the separator comprises an electrolyte facilitating the exchange of charged particles such as ions between the anode and the cathode.

The separator has an anodic face and a cathodic face, said cathodic face being opposite the anodic face. The electrolytic face of the anode is in contact with the anodic face of the separator. The electrolytic face of the cathode is in contact with the cathodic face of the separator.

The anode and/or the cathode (or electrodes) may be solid state electrodes. The electrodes are rigid, semi-rigid or flexible.

The battery cell may comprise fibers, in particular structural fibers such as carbon, glass or polymer fibers. Thereby the battery cell may have a high load resistance and in some instances may be used as a structural component ensuring a structural function such a mechanical reinforcement, for example in a structure of a vehicle.

More particularly, an electrode (anode or cathode) may comprise a composite material. An electrode may comprise a fiber reinforced polymer, for example comprising carbon fibers. The fibers may be coated by an electrode coating, such as a ferritic oxide coating for example on the carbon fibers of the cathode. The impregnating polymer may be any resin, such as thermoset, or thermoplastic resin. Such resin is treated with ionic liquid, such as Li-ionic liquid, before curing.

The separator may also comprise a composite material. More particularly a separator may comprise a fiber reinforced polymer for example comprising glass fibers.

Such battery cell presents the benefit of being adapted to be integrated into a load carrying structure. Thereby a battery according to the invention may be a structural battery which also has a structural function in the device, and in particular in the vehicle, in which it may be integrated.

An electrode (anode or cathode) may comprise one or more layers (or plies) of material. Each ply of an electrode may be of the same or of different materials.

The anode has a thickness between its electrolytic face and its collecting face smaller than at least one other dimension of the anode, and beneficially smaller than the width and the length of the anode.

The cathode has a thickness between its electrolytic face and its collecting face smaller than at least one other dimension of the cathode, and beneficially smaller than the width and the length of the cathode.

The thin film is adapted to contact electrically the anode and the cathode of a same battery cell, that is to say a cathode and an anode on opposite faces of a battery cell. The thin film provides the benefit of a compact electrical connection with a plurality of battery cells. In particular with very thin battery cells, such as for example laminated battery cells, a thin film according to the invention allows connecting a high number of battery cells electrically to one or more electrical circuit in a very compact manner.

The thin film has a thickness smaller than at least one other dimension of the thin film, in particular its thickness is smaller than its width and length. More particularly the thickness of the thin film is smaller than its width and length by a factor of at least 10. The thin film may have a thickness below 1 (ONE) mm, more beneficially below 0.2 mm, for example of about 0.01 mm. Therefore the thin film comprises a first face and a second face opposite to each other.

The thin film also provides the benefit of a simple and reliable manufacturing and/or assembly of a battery according to the invention. A high number of battery cells may be connected together and the battery may be equipped with integrated electronics such as sensors all in very few simple steps of manufacturing.

The thin film is beneficially made in an electrically isolating material. The thin film thus isolates the battery cells, in particular the anode and the cathode from each other. More particularly the thin film isolate the cathode of a first battery cell in contact with a portion of a first face of the thin film from the anode of a second battery cell in contact with a second opposite face of the thin film at least partially in the same said portion of the thin film.

The thin film may be a thin thermoplastic or thermoset foil.

Nonetheless, the thin film beneficially comprises at least one thermoplastic layer. This may allow to attach the thin film to a different element such as: an electrode, a body of the battery, a composite component (in particular a CFRP component), etc. Furthermore the thin film may ensure a bonding with each battery cell so as to assemble and keep together the battery cells of the battery. This may allow avoiding additional assembly elements in the battery and thereby providing a more compact and lighter battery.

For example the thin film may be of Polyethylenimine (PEI).

The thin film may be made in a fire-resistant material. The thin film may for example comprise a fire-resistant additive. Alternatively or in combination, the thin film may be coated by a fire-resistant material. Alternatively or in combination, the material of the thin film may also have a high-temperature melting point. Thereby the thin film may stop or at least slow the progress of a fire in the battery, and in any case not feed the fire.

The thin film may comprise: an anode connector and a cathode connector.

An anode connector (and/or cathode connector) is placed on the thin film and is an electrical connector adapted to provide an electrical connection with an external device such as a plug, a secondary electrical circuit, a wire, an electrical device, etc.

Moreover the thin film may comprise:
- at least a first electrical anodic circuit adapted to conduct electrical charges between the anode contact and an anode connector,
- at least a second electrical cathodic circuit adapted to conduct electrical charges from the cathode contact to an cathode connector.

The electrical anodic and/or cathodic circuits may be used to transport electrons both when discharging the battery, and when charging the battery.

The thin film beneficially comprises at least one electrical circuit in a bent section between the anode contact and the cathode contact.

The electrode contact (anode contact or cathode contact) of the thin film electrically contacts the electrode (anode or cathode). The electrode contact may be a direct electrical contact or an indirect electrical contact through an intermediate electrically conductive element, such as for example a layer of electrically conductive material such as an electrode collector for example.

The anode may comprise an anode collector in direct electrical contact with the material of the anode to collect electrical charges from the anode, a face of the anode collector forming the collecting face of the anode. Similarly, a battery according to the invention may comprise a cathode comprising a cathode collector in direct electrical contact with the material of the cathode to collect electrical charges from the cathode, a face of the cathode collector forming the collecting face of the cathode. In such embodiments, the anode contact (and/or cathode contact) of the thin film is beneficially in direct electrical contact with the anode collector (and/or cathode collector).

Alternatively or in combination,
- the anode contact is configured to form an anode collector of the anode, and/or
- the cathode contact is configured to form a cathode collector of the cathode.

Thereby, the electrode (anode or cathode) contact is in direct contact with the material of the electrode. The electrode collector is therefore directly integrated in the electrical circuit carried by the thin film. Such construction renders the battery particularly compact because the electrode collector on the battery cell and the electrical contact on the thin film are replaced by one electrode collector which also ensures the function of electrical contact between the electrode's material and the thin film's electrical circuit. Potentially two layers of material (one for the collector and one for the contact) are replaced by one layer of electrically conductive material ensuring both a collecting function and a contacting function.

The anode contact and the cathode contact may be printed on the thin film.

Different known printing manufacturing methods may be used to print the electrode contacts, that are described further after.

The anode contact and the cathode contact may be made of different materials.

For example the anode contact may be made of a first metal or metallic alloy, and the cathode contact may be made of a second metal or metallic alloy, different from the first metal or metallic alloy. Such embodiments are particularly beneficial when the electrode contacts also ensure the function of electrode collectors.

Moreover, whether or not the electrode contact ensures the function of collector, the electrode contact may be coated with graphene. The graphene may be deposited on the electrode contact. The addition of graphene on the surface of the electrode contact improves the electrical contact with the collecting face of the electrode (anode/cathode).

The anode contact and the cathode contact may have different shapes and/or a different effective surface, and/or a different placement on the thin film respectively to the cathode collecting surface and the anode collecting surface.

The effective surface is the surface of the electrode contact which is in electrical contact with the electrode. In particular when the electrode contact ensures the function of electrode collector, the effective surface is the surface in contact with the electrode's material.

The variation in shape and/or effective surface and/or placement on the thin film respectively to the multiple electrode collecting surfaces, may allow for flexibility in the arrangement of the battery cells in a battery according to the invention. Moreover it may for example allow leaving sufficient space on the thin film on the side of an electrode contact for one or more electrical circuits.

The thin film may comprise:
- a plurality of anode contacts,
- a plurality of anode connectors,
- a first electrical anodic circuit adapted to conduct electrical charges between a first anode contact and a first anode connector,
- a second electrical anodic circuit adapted to conduct electrical charges between a second anode contact and a second anode connector,
- the second anodic circuit being integrally electrically isolated from the first anodic circuit.

The thin film may comprise:
- a plurality of cathode contacts,
- a plurality of cathode connectors,
- a first electrical cathodic circuit adapted to conduct electrical charges between a first cathode contact and a first cathode connector,
- a second electrical cathodic circuit adapted to conduct electrical charges between a second cathode contact and a second cathode connector,
- the second cathodic circuit being integrally electrically isolated from the first cathodic circuit.

Independent anodic (or cathodic) circuits allow managing individually the battery cells of a battery. In particular one or more battery cell and/or one or more group(s) of battery cells may have its own independent anodic circuit and cathodic circuit leading respectively to an anodic connector and a cathodic connector isolated from others anodic and cathodic connectors. Thereby in a battery according to the invention, the current in each electrical circuit and the voltage between electrical circuits may be maintained at low values, while the battery may be delivering a high current or high voltage with many battery cells connected in parallel or in series outside the thin film. Therefore connecting independently a battery cell or a group of battery cell instead of connecting all the battery cells on a same electrical circuit allows using a thin film with thin electrical circuits such as for example electrical circuits printed on the thin film, thereby providing a compact battery.

Moreover, the connection in series or in parallel is not fixed in such battery but can be configured in function of the needs of the electrical devices fed by the battery. A switch unit may be connected to the anode connectors and cathode connectors, said switch unit being adapted to connect at least two anodic circuits or at least two cathodic circuits in series or in parallel. Having independent, isolated from each other, anodic circuits (respectively cathodic circuits) allows addressing individually the battery cells of a battery according to the invention for example by a switch unit as described above. Switches ensuring this function may also be directly integrated on the thin film.

A battery and more particularly the output of a battery according to the invention can therefore be managed and configured on demand and in a real-time manner.

Furthermore, in case of failure of a battery cell, an individual wiring of this battery cell allows to switch it off and electrically isolate it in a very simple manner. This is of particular importance for on-board batteries of vehicles, and more particularly for batteries of aircrafts. A battery cell may for example be isolated by a manual or automatic opening of a safety switch placed on an electrical circuit on which the defective battery cell is connected. More particularly a safety switch may be integrated on the thin film on the anodic and/or cathodic circuit of a battery cell. Such safety switch may for example be controlled based on the measurement of a sensor integrated on the thin film, such as for example a temperature sensor, a pressure sensor, a chemical sensor, a gas sensor, a liquid sensor, a voltage or current sensor, etc.

However in some embodiments of the invention, the anodic circuits (or cathodic circuits) of a group of or of all of the battery cells may be connected together on a common electrical circuit on the thin film. Thus a cumulated voltage or current (depending on the connection arrangement) may be obtained at the anode collector(s) (respectively cathode collector(s)).

The thin film may comprise at least a first electrode contact on a first face and a second electrode contact on a second face opposite the first face. The two electrode contact on the two faces of the thin film may moreover be placed on the same section of the thin film. The two electrode contact may be electrically isolated from each other by the material of the thin film. This permits the thin film to be placed between a plurality of battery cells while connecting every electrode of every battery cell arranged for example as a stack of battery cells.

The thin film may comprise a plurality of layers comprising at least a first layer comprising an electrically conductive portion and a second layer comprising an electrically conductive portion.

A conductive portion of the thin film may for example be an electrode contact, an anodic circuit, a cathodic circuit, an electronic component, etc..

One or more of the layers of the thin film may be a metallic layer so as to form a conductive layer for example forming part of an electrical anodic/cathodic circuit.

The thin film comprises one or more electrically isolating layer(s). The thin film may comprise at least three layers with at least a conductive portion being placed on or in an intermediate layer so as to isolate said conductive portion from the outer surfaces of the thin film. In order to electrically isolate a conductive portion from the outer surfaces of the thin film, the conductive portion may also be placed on the inner face of a layer of a thin film comprising only two layers.

An electrical (anodic and/or cathodic) circuit may be placed in an intermediate layer or between two isolating layers so as to better isolate it from other electrical circuits, electrode contacts or electronics.

A thin film may also comprise a coating layer. A coating layer may beneficially be applied on one or on each face of the thin film. In particular a coating layer may be applied over anodic/cathodic circuits, but not over electrode contacts. The coating is chosen to be an electrically isolating material.

The compactness of the battery may be optimized in the direction of the width of the thin film with a multilayer thin film. Indeed the anodic/cathodic circuits may not need to be placed on an extra-width portion of the thin film but may on the contrary run in between two electrode contacts respectively placed on opposite faces of a same section of thin film and from which the anodic/cathodic circuit is electrically isolated by at least one isolating layer of the thin film.

The thin film may comprise at least one electrically conductive via crossing through at least one layer, said via being electrically connected to a first electrically conductive portion in a first layer and to a second electrically conductive portion in a second layer.

Such via allows connecting for example a first anode (or cathode) contact disposed on a first outer face of the thin film and at least a second anode (respectively cathode) contact disposed on a second opposite outer face of the thin film. Such via may also ensure an electrical connection between an electrode contact on the surface of the thin film and an electrical circuit placed in the thin film, for example in an intermediate layer of the thin film.

In a battery according to the invention, a plurality of battery cells may be stacked together between one or more bent section of the thin film.

However, the battery beneficially comprises only one battery cell between two consecutive folds of the thin film.

That means that in such battery, only one half cell of each type separated from each other by one separator, is placed between two consecutive folds of the thin film. Thereby the battery may be made very compact. In particular in such configuration, the electrode contact can easily be printed on the thin film and also ensure the electrode collector function. Moreover the battery can more easily be manufactured through deposition, additive manufacturing, lamination, all techniques providing for compact manufacturing of battery elements.

A battery according to the invention beneficially comprises a plurality of battery cells. The battery cells may be arranged in one or more stack(s) of battery cells. In such stack of battery cells, the cells may be arranged in a pattern with anode and cathode alternatively in which the cells all have the same orientation (CA-CA-CA... pattern), or in a pattern with two anodes and then two cathodes alternatively in which the cells are arranged back-to-back (CA-AC-CA-AC-... pattern). Indeed any pattern is possible according to the invention since the thin film may be placed between each individual battery cell, and is beneficially made of at least one layer of electrically insolating material such that every battery cell (and half-cell) may be electrically isolated from another battery cell.

The thin film may be arranged in a meandering pattern between a plurality of battery cells.

To do so, the thin film comprises on a first face and/or on a second face alternatively an anode contact and a cathode contact. More particularly a thin film according to the invention comprises a plurality of anode contacts and a plurality of cathode contacts on a same face, with a pattern such as: A-C-A-C-A-C-A-etc. More particularly a thin film according to the invention comprises a plurality of anode contacts and a plurality of cathode contacts on each of its two faces.

The anodic circuit and/or the cathodic circuit may be printed on the thin film.

Different known printing manufacturing methods applicable to printed circuit boards or other additive manufacturing examples may be used to print the anodic/cathodic circuit, the electrode contacts, the integrated electronics, and/or other circuitry. For example inkjet printing methods may be used in which an electrically conductive ink is applied to the thin film. Prefabricated conductive elements may also be arranged and attached to the foil. The price and time of manufacturing can therefore be limited by applying the electrode contact in a very thin layer.

The thickness of the anode contact and/or of the cathode contact may be smaller than the thickness of an anodic circuit and/or of a cathodic circuit.

The anodic/cathodic circuit(s) may be more robust than the electrode contact by being made thicker. Indeed the electrode contacts are placed between relatively flat surfaces of the battery cells and therefore do not need to be specifically robust in particular robust to movements or flexion of the thin film. Electrical circuits on the contrary extend in the bent sections of the thin film and are more exposed to movements since they are outside the battery cells stack, and as such need to be more robust. The different thicknesses may for example be obtained by back-etching the areas of the printed electronics which shall be thinner.

The thicknesses (and/or widths) of the anodic/cathodic circuit(s) can be adjusted to fit the required current carrying capacity.

The thickness of the thin film may also be different in a first portion of the thin film than in a second portion of the thin film. More particularly, a first section of the thin film that is to be placed against a battery cell - and more particularly between two battery cells, may be thinner than a second section of the thin film that is to be bent between two battery cells. The bent section is thereby more robust to resist the flexion and potential movements, while the overall weight of the thin film is kept low by being kept thin where it does not need to be robust. Such differences in thickness may for example be obtained by the use of a different number of layers in different portions of the thin film.

The thin film comprises integrated electronics.

The integrated electronics may include for example but not exclusively: switches, sensors (including sensors contacts and wirings), micro-heater, analog and/or digital electronics, etc. Such sensors may comprise for example a temperature sensor, a chemical sensor, a gas sensor (for example a hydrogen sensor), a liquid sensor, a voltage or current sensor, a pressure sensor (for example based on pressure sensitive ink), a strain sensor, a resistive sensors and contacting through four-wire-measurements, etc. Besides one or more electronic component or electrical connection may also comprise a self-test, for example by resistance measurement.

The integrated electronics may at least partially be printed on the thin film or may be integrated by a hybrid integration of the components such as for conventional electronic chips. More particularly the inventors have determined that when the lifetime of such printed electronics is longer than the lifetime of the battery cells, allowing the integrated electronics to be fully printed on the thin film.

The miniaturization and the low cost of fabricating a thin film with many integrated electronics allow placing many more sensors in the battery while remaining compact and at controlled costs of manufacturing. A high number of integrated electronics such as sensors and switches therefore permits a closer monitoring of the battery and potential early counteractions in case of safety or longevity issues.

The integrated electronics may be used for health monitoring of one or more battery cells. The integrated electronics may also be used for usage monitoring of one or more battery cells. For example the integrated electronics may provide the function of a local discharging or local charging (for example to balance the charges of two battery cells with different charge) in order to check the charge characteristics of an individual battery cell and/or harmonize the charge of the battery cells.

The integrated electronics may be used to ensure the safe functioning of the battery, for example by allowing the detection of a malfunction and/or the switching off of one or more battery cells.

The integrated electronics may also be used to manage the battery use in real-time for example by switching on/off one or more battery cells or by modifying the wiring of the battery so as to change its output characteristics. The integrated electronics may thus comprise data and power management components and circuitry.

The integrated electronics may be beneficially placed in the bent sections of the thin film. Such arrangement allows for a more compact thin film, with portions of the thin film placed in contact with the battery cells being mainly dedicated to electrode contact, and the portions of the thin film placed outside the stack of battery cells supporting the integrated electronics. Thereby the surface of the thin film may be optimized with large electrode contact surfaces and surfaces of thin film in the bent sections occupied by the integrated electronics and the electrical circuits.

The width of the thin film may be larger than the width of each battery cell.

Such geometry of the thin film permits to maximize the contact surface between the electrode contact of the thin film and the collecting face of the electrode, while placing the electrical circuits on the additional width of the thin film. Moreover additional elements such as integrated electronics may also be placed on the additional width of the thin film.

The longitudinal compactness (in the direction of the thickness of the battery cells) of the battery may be improved by using a one layer or few layers thin film, while using the additional width of the thin film to place the electrical circuits for example.

The thin film may comprise a first electrical (anodic/cathodic) circuit for the charge of a battery cell and a second electrical (anodic/cathodic) circuit for the discharge of this battery cell. This may in some embodiments allow reducing the amount of electronics to be embedded on the thin film such as for example the number of switches for the charging/discharging cycles. Furthermore, in a battery according to the invention:
- the surface of the anode contact which is in electrical contact with the collecting face of the anode, may be smaller than the surface of the collecting face of the anode, such that a portion of the collecting face of the anode is in contact with a portion of the thin film different from the anode contact, and/or
- the surface of the cathode contact which is in electrical contact with the collecting face of the cathode, may be smaller than the surface of the collecting face of the cathode, such that a portion of the collecting face of the cathode is in contact with a portion of the thin film different from the cathode contact.

The surface of the electrode contact which is in electrical contact with the collecting face of the electrode may be the whole surface of the electrode contact or may be only a portion of it.

In some embodiments, this allows to have a thin film of the same width or narrower than the width of a battery cell, and more particularly than the width an electrode collecting face.

Thus, according to such embodiments of the invention, at least a portion of the electrode's collecting face is in direct contact with a non-electrically conduction portion of the thin film, in particular with a portion of the thin film which is not an electrode contact. Said otherwise, at least a portion of the electrode's collecting face is in direct contact with a non electrically conductive layer of the thin film, for example a polymeric material of the thin film and/or a coating of the thin film. When the electrode contact is at least partially made through a metallization, the thin film may thus be only partially metallized in the electrical contact area with the collecting face of an electrode. The electrode contact may for example present an electrically conductive surface with holes that do not comprise the electrically conductive material such that the underneath material of the thin film is exposed in these holes' areas and put in contact with the electrode's collecting face. The electrode contact may comprise a high variety of other shapes such as fingers, star shape, etc.

Thereby a chemical and/or mechanical bonding may be established between the thin film and the electrode's material. In particular if the thin film comprises a polymer and the electrode comprises a polymer as well, a bonding may appear between the two polymers. It may for example be the case with a thin film comprising thermoplastic on its outer layer and an electrode made of fibers impregnated in a resin matrix.

Moreover the portion of the thin film which is arranged to be in contact with the electrode's collecting face and which is not electrically conductive may comprise a layer of a bond-promoting material. The bond-promoting material must be chosen so as to promote a chemical and/or mechanical bonding between the thin film and the electrode's material.

A battery according to the invention may further comprise:
- at least two stacks of battery cells, each stack comprising:
   - at least two battery cells, and
   - a thin film,
- a flexible connecting device adapted to be in electrical contact with at least two different thin films.

Thereby a battery with a high storage capacity may be obtained while being particularly compact and light. Besides the design of such battery is facilitated as it can easily be divided into a plurality of stacks so as to be fitted in the volume available for the installation of the battery.

In particular the battery may comprise a plurality of battery stacks each comprising a plurality of battery cells according to the invention and a thin film according to the invention, that is to say a thin film at least partially flexible and adapted to be bent between the anode contact and the cathode contact so as to ensure an electrical contact simultaneously:
- between the anode contact and a collecting face of an anode on a first face of a battery cell, and
- between the cathode contact and the collecting face of the cathode of said battery cell, the cathode being on a second face opposite the first face of the battery cell.

The flexible connecting device may be of different nature. However it may beneficially be made of an at least partially flexible film, called connecting film. In particular the connecting film may be a flexible thin film. The flexible connecting film may be have similar features to the thin film, ie with one or more layers, and/or with integrated electronics, and/or through additive manufacturing and/or lamination, etc.

The flexible connecting device may comprise at least an electrical circuit, for example a printed electrical circuit. The flexible connecting device may comprise a plurality of electrical circuit. For example, the flexible connecting device may be adapted and arranged in the battery so that an electrical circuit of the flexible connecting device may be adapted to contact one or more anode connector (or cathode connector) so as to collect charges from the connector(s) and direct them to a main connector borne by the flexible connecting device.

The flexible connecting device may be installed in a meandering pattern between a plurality of battery stacks.

Alternatively, in some embodiments of the invention, the thin film may run successively between a plurality of stacks. This also provides a very compact and easy to manufacture battery.

The invention extends to a thin film for a battery comprising:
- at least one electrically isolating layer,
- at least one anode contact adapted to electrically contact an anode of a battery cell of the battery,
- at least one cathode contact adapted to electrically contact a cathode of a battery cell of the battery,
characterized in that it is:
- at least partially flexible,
- adapted to be bent between the anode contact and the cathode contact so as to ensure an electrical contact simultaneously:
   - between the anode contact and a collecting face of an anode on a first face of a battery cell, and
   - between the cathode contact and the collecting face of the cathode of said battery cell, the cathode being on a second face opposite the first face of the battery cell.

In particular the thin film is adapted to be bent between the anode contact and the cathode contact so as to ensure an electrical contact simultaneously:
- between the anode contact and a collecting face of the anode of a battery cell, and
- between the cathode contact and the collecting face of the cathode of the same battery cell.

The invention also extends to a method for the manufacturing of a battery comprising:
- obtaining a battery cell comprising:
   - a separator,
   - an anode having an electrolytic face in contact with the separator and a collecting face opposite its electrolytic face,
   - a cathode having an electrolytic face in contact with the separator and a collecting face opposite its electrolytic face,
   - said separator being arranged between the anode and the cathode such that the collecting face of the anode and the collecting face of the cathode are arranged on opposite sides of the separator,
- obtaining a thin film comprising:
   - at least one electrically isolating layer,
   - at least one anode contact adapted to electrically contact the anode,
   - at least one cathode contact adapted to electrically contact the cathode,
characterized in that the thin film is:
- made at least partially flexible,
- bent between the anode contact and the cathode contact so as to ensure an electrical contact simultaneously:
   - between the anode contact and the collecting face of the anode, and
   - between the cathode contact and the collecting face of the cathode.

Moreover at least some of the integrated electronics of the thin film may be used to control the manufacturing process of the thin film and/or of the battery. For example the temperature and/or pressure in the thin film may be measured during one or more manufacturing steps. Besides sensors permitting dielectric analysis may also be integrated in the thin film to monitor some manufacturing steps. In particular the curing of a laminated thin film may be monitored through one or more of such measurements in order to reach a good degree of curing.

The electrodes and the separator of the battery cell are may be made thin. In particular the electrodes and the separator may have a thickness of less than 0,5mm each, in particular less than 0,2mm, for example of 0,1mm. Thereby a battery cell according to the invention may be as thin as 0,3mm.

The method of manufacturing may further comprise depositing at least part of a battery cell on the thin film.

Depositing may be achieved by many different techniques including: additive layer manufacturing, lamination, metallization, etc, or combination of such techniques.

In particular an electrode may be laminated on the thin film directly with an electrode contact placed in between the thin film and the electrode. Besides an electrolytic separator may also be deposited on the electrode, for example by lamination.

Alternatively or in combination, one or more portions of the thin film may be manufactured directly on the electrode, in particular on the electrode's collecting face. In particular the electrode's contact may be deposited directly on the electrode. Other portions such as a polymer layer of the thin film may also be directly deposited on the battery cell.

In some cases, depending on the thickness of a battery cell and on the material(s) of the thin film and in particular of the electrical circuits and/or electronics it may comprise, the bend of the thin film between two faces opposite faces of a battery cell may have a radius to high for the thin film to keep its mechanical and/electrical integrity.

Therefore, a method according to the invention may further comprise attaching a first segment of thin film comprising the anode contact to a second segment of thin film comprising the cathode contact.

Indeed the thin film may then be produced in segments and be each placed between a couple of battery cells. In a previous or subsequent step the thin film segments are attached to each other. Besides the electrical circuits are beneficially connected to each other during the attachment step in order to ensure an electrical continuity between two segments of thin film. The method therefore beneficially comprises electrically connecting at least one electrical circuit of the first segment of thin film to at least one electrical circuit of the second segment of thin film. Such electrical connection may be realized for example by simple mechanical contact, by welding, by soldering, etc. Moreover the electrical connections between two segments of thin film may be subjected to a local treatment by laser or electron beams. The attachment of the segments of the thin film therefore ensure a mechanical and electrical bonding. At least a section of each segment of thin film is bent, but only with a small bend, much smaller than the 180 degrees of bend required in case of a one-piece thin film.

The method may comprise, before the first segment of thin film is attached to the second segment of thin film: placing the first segment of thin film between a first battery cell and a second battery cell with an anode contact of the first segment of the thin film electrically contacting the collecting face of an anode of the first battery cell or of the second battery cell, placing the second segment of thin film between a second battery cell and a third battery cell with a cathode contact of the second segment of thin film electrically contacting the collecting face of a cathode of the second battery cell or of the third battery cell.

The invention also extends to other possible combinations of features described in the above description and in the following description relative to the figures. In particular, the invention extends to batteries comprising features described in relation to the thin film and/or the method for manufacturing a battery ; the invention extends to thin films comprising features described in relation to the battery and/or the method for manufacturing a battery ; the invention extends to methods for manufacturing a battery comprising features described in relation to the battery and/or the thin film.

Some specific exemplary embodiments and aspects of the invention are described in the following description in reference to the accompanying figures.
Figure 1 is a representation of a cross-section of a battery embodiment according to the invention.
Figure 2 is a representation of a cross-section of a detailed view of a battery cell and a thin film according to Figure 1.
Figure 3a is a representation of a first face of a thin film embodiment according to the invention.
Figure 3b is a representation of a second face of the thin film of figure 3a.
Figure 4 is a representation of a cross-section of a battery during a manufacturing process according to the invention.
Figure 5 is a representation of a cross-section of a battery embodiment according to the invention.
Figure 6 is a representation of a face of a thin film embodiment according to the invention.
Figure 7 is a representation of a battery of a cross-section of a battery embodiment according to the invention.

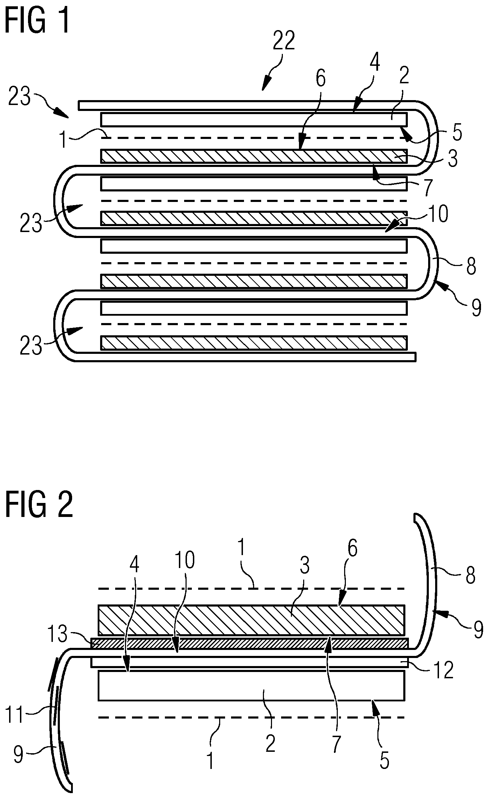

In Figure 1 a first specific embodiment of a battery according to the invention is represented.

The battery 22 comprises a plurality of battery cells 23 stacked together in a pile. More particularly in this embodiment four battery cells are represented.

Each battery cell comprises an anode 2 and a cathode 3 separated from each other by a separator 1. The anodes 2 comprise an electrolytic face 5 in contact with the separator 1. The anodes 2 comprise a collecting face 4 opposite the electrolytic face 5.

The cathodes 3 comprise an electrolytic face 6 in contact with the separator 1. The cathodes 3 comprise a collecting face 7 opposite the electrolytic face 6.

A thin film 8 is placed in a meandering pattern between the battery cells 23. The thin film therefore has some bent sections 9. Some straight sections 10 of the thin films are between two subsequent battery cells 23. The battery 22 comprises only one battery cell between 2 successive straight sections 10 of the thin film 8. Therefore, the thin film is bent in a bent section 9 in order to ensure an electrical contact with each of the two collecting faces (4, 7) of a battery cell, the collecting faces (4, 7) being respectively of an anode 2 and of a cathode 3, the collecting faces (4, 7) facing away from each other.

In figure 2 a portion of the thin film 8 is represented with more details.

The straight section 10 of the thin film bears an anode contact 12 and a cathode contact 13. The anode contact 12 is arranged on a first face of the thin film 8 while the cathode contact 13 is arranged on the opposite face of the thin film 8.

The collecting face 4 of the anodes 2 are in contact with the anode contact 12 of the thin film 8. The collecting face 4 of the cathodes 3 are in contact with the cathode contact 13 of the thin film 8.

In this embodiment, the anode contact 12 also ensures the function of an anode collector for the anode 2, so that the material of the anode 2 is directly in contact with the anode contact 12. The anode contact 12 is beneficially a metallized layer on the thin film. The cathode contact 13 also ensures the function of a cathode collector for the cathode 3, so that the material of the cathode 3 is directly in contact with the cathode contact 13. The cathode contact 13 is beneficially a metallized layer on the thin film 8.

The thin film also comprises electrical circuits to transport electrons to and from the electrode contacts (12, 13).

The thin film 8 comprises integrated electronics 11 such as for example a temperature sensor, a pressure sensor, a chemical sensor, a gas sensor, a liquid sensor, a voltage or current sensor, etc. The integrated electronics 11 are beneficially integrated in one or more bent sections 9 of the thin film 8, such that they do not occupy space in the straight section, allowing the contact surface between the anode contact 12 and the collecting face 4 of the anode 2, and between the cathode contact 13 and the collecting face 7 of the cathode 3 to be maximal. Besides the integrated electronics 11 may also be better cooled down in a bent section 9 of the thin film 8 than in between two battery cells 23.

The thin film 8 may be made of one layer of Polyethylenimine (PEI) on which the electronics 11 are integrated, and the electrode contacts (12, 13) and electrical circuits are printed. The electrode contacts (12, 13) and electrical circuit may be for example printed with the same techniques as for printing a circuit board. The anode contact 12 and the cathode contact 13 may be made of different materials, in particular when they are to also ensure the function of electrode collector. In particular the electrode contacts (12, 13) may comprise a metal foil such as for example an aluminum, aluminum alloy, copper or copper alloy foil.

The anode 2 may be made of one or more layer(s) of a composite material such as carbon fibers impregnated in a matrix of HexFlow® RTM6 resin commercialized by Hexcel®.

The cathode 3 may be made of one or more layer(s) of a composite material such as carbon fibers coated with a ferritic oxide, impregnated in a matrix of HexFlow® RTM6 resin commercialized by Hexcel®.

The separator 1 may be made of one or more layer(s) of a composite material such as glass fibers impregnated in a matrix of HexFlow® RTM6 resin commercialized by Hexcel®.

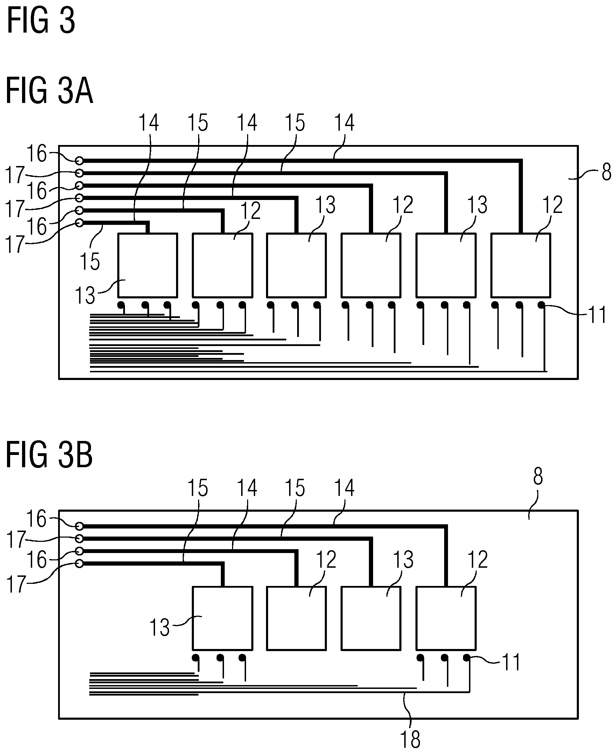

In figure 3a the top face 19 of a thin film is presented. In figure 3b a bottom face 20, opposite the top face 19, is presented. The two faces represent the two sides of a thin film 8 according to this specific embodiment.

The thin film 8 comprises anode contacts 12 and cathode contacts 13 on each face in order to contact anodes and cathodes on each sides of a plurality of battery cells when placed in a meandering pattern between battery cells, such as the pattern presented in relation to figure 1. Each face of the thin film 8 comprises a series of alternated anode contacts 12 and cathode contacts 13.

In the embodiment of figures 3a and 3b, the electrode contacts (12, 13) have a full square shape in order to optimize the contact surface with their respective electrode. However the electrode contacts (12, 13) may have different shapes in other embodiments, including shapes that do not correspond in shape and/or in surface to the collecting face of the corresponding electrode (2, 3). In particular in some embodiments, the electrode contacts (12, 13) may alternatively or in combination have: finger shapes, holes, star shapes, etc. in order to ensure that at least a portion of the thin film 8 base material - in particular a thermoplastic such as a PEI - will be in direct contact with the material of the electrode (2, 3) - in particular a polymer matrix of a composite electrode (2, 3).

Each anode contact 12 is connected to an individual anodic electrical circuit 14. The anodic electrical circuits 14 each lead to an anode connector 16 adapted to connect an external cable or electric device to the thin film 8. Each cathode contact 13 is connected to an individual cathodic electrical circuit 15. The cathodic electrical circuits 15 each lead to a cathode connector 17 adapted to connect an external cable or electric device to the thin film 8. Thereby the current and voltage of each battery cell may be managed individually and independently by an electric device (not depicted). For example such device may:
- isolate electrically a battery cell while still using another battery cell, and/or
- charge a battery cell while discharging another battery cell, and/or
- add the voltages of two or more battery cells, and/or
- add the current of two or more battery cells,
- etc.

Having individual electrical circuits (14, 15) for each electrode (2, 3) in a battery stack allows using a flexible thin film with thin electronics, particularly with thin electrical circuits (14, 15).

The electrical circuits (14, 15) are placed sideways from the electrode contacts (12, 13) such that the thin film 8 is wider than the battery cells 23. This allows to use a thin film 8 particularly thin, for example comprising only one layer of base material, so as to obtain a cheap to manufacture and compact battery in the direction of the stack of battery cells.

In the embodiment of figures 3a and 3b, the thin film 8 comprises integrated electronics 11 placed in straight sections 10 of the thin film 8, sideways from the electrode contacts (12, 13). In such embodiments, the thin film 8 is therefore wider than the battery cells 23, to allow space for the integrated electronics 11. The thin film 8 also comprises electrical circuits 18 for the integrated electronics 11. However it is may also be possible to integrate wireless integrated electronics 11 on the thin film.

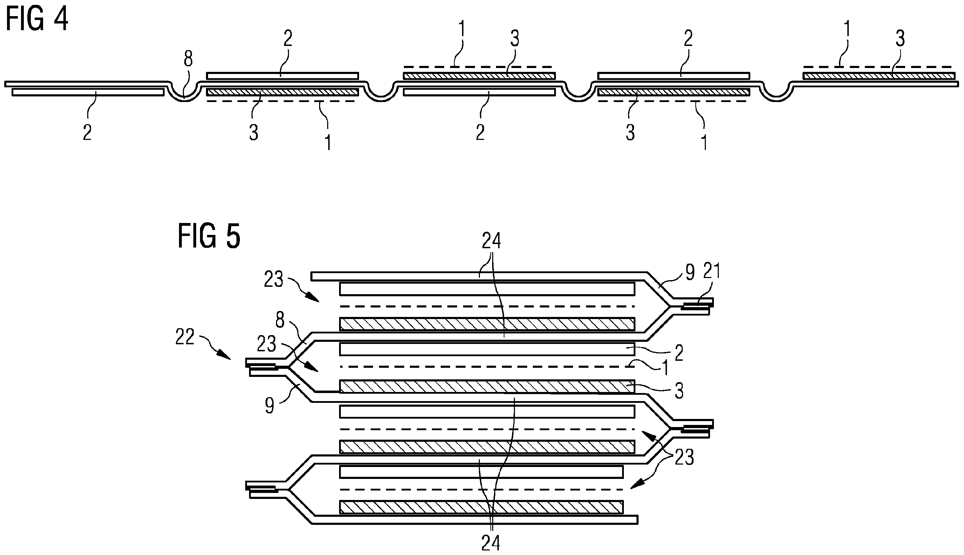

In figure 4 a battery according to the invention is depicted at an intermediate manufacturing step. In this manufacturing process:
- a base layer for a thin film 8 has been provided,
- anode contacts 12 and cathode contacts 13 have been deposited on the thin film 8,
- integrated electronics 11 and electrical circuits (14, 15) (not represented) have been deposited on the thin film 8,
- anodes 2 and cathodes 3 have been deposited on the thin film 8,
- separators 1 have been deposited on the cathodes 3.

In a subsequent step to the state represented in figure 4, the thin film 8 may be folded in a meandering pattern so as to join each anode 2 with a nearby separator 1 and thereby form the battery cells and the battery.

The deposition steps may be made through lamination, additive layer manufacturing, etc. The electrodes (2, 3) may be deposited in a plurality of steps, for example as a plurality of successive layers.

In figure 5 a battery obtained by an alternative manufacturing process is depicted.

In this embodiment, the battery comprises a plurality of segments 24 of thin film 8, each segment 24 being placed between two battery cells 23. The segments are made longer than the length of a battery cell 23, such that the additional length portions may be attached to each other. In the embodiment depicted in relation to figure 5 each segment 24 of thin film 8 have been attached with another segment 24. A segment 24 is attached at one of its extremity with an extremity of a segment placed on the battery cell above the considered segment 24 and at the second of its extremity with an extremity of a segment placed on the battery cell below the considered segment 24, so as to generally form a meandering pattern.

In such embodiment, the bent sections 9 of a thin film 8 have two opposite bend with very low bending radii. It therefore allows to use a thicker or brittle thin film.

The attachment 21 is adapted to create an electrical connection between the corresponding electrical circuits of two successive thin film 8 segments 24. This may be obtained for example by welding.

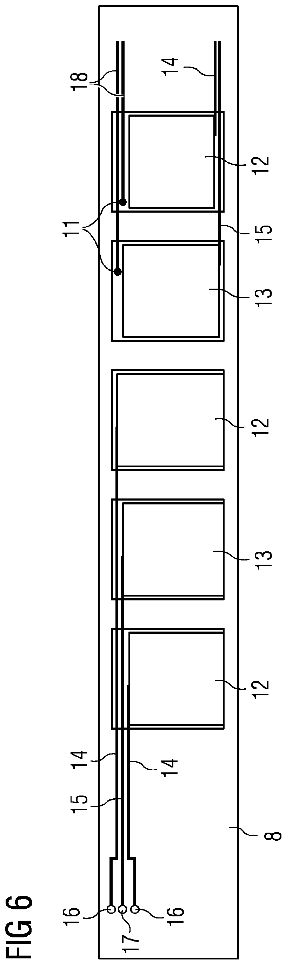

In Figure 6 a face of another embodiment of a thin film 8 is represented.

As in the previous embodiment of the Figures 3a and 3b, in this embodiment each anode contact 12 is connected to an individual anodic electrical circuit 14. The anodic electrical circuits 14 each lead to an anode connector 16 adapted to connect an external cable or electric device to the thin film 8. Each cathode contact 13 is connected to an individual cathodic electrical circuit 15. The cathodic electrical circuits 15 each lead to a cathode connector 17 adapted to connect an external cable or electric device to the thin film 8.

However, in this embodiment, the electrode contacts (12, 13) are smaller than the collecting face of the electrodes of the battery cells. Besides, the electrical circuits (14, 15) are at least partially overlaid by at least one electrically isolating layer so that an anode (or a cathode) of a battery cell may not electrically contact a cathodic circuit 15 (respectively an anodic circuit 14).

This allows to place the electrical circuits (14, 15) within the width of a battery cell, thereby contributing to obtaining a very compact battery in the direction of the width of the thin film 8.

In the same way the size of the electrode contacts (12, 13) may be slightly reduced - compared to the size of the collecting face of the electrodes - in order to integrate electronics such as sensors 11 and their wiring 18.

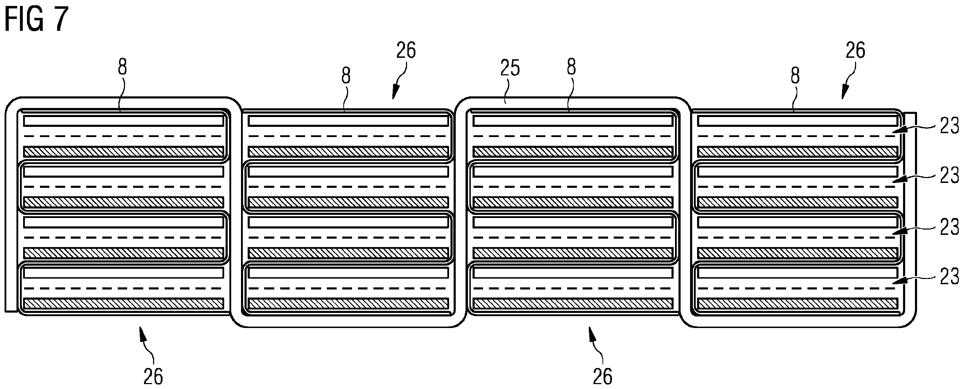

Figure 7 represents a battery 22 comprising four stacks 26 of each four battery cells 23. Each stack 26 comprises a thin film 8 according to the invention, arranged in a meandering pattern between the battery cells 23.

Moreover, the battery comprises a flexible connecting device in the form of a flexible connecting film 25. The flexible connecting film 25 is arranged in a meandering pattern between the battery stacks 26.

The thin films 8 and the flexible connecting film 25 are adapted and arranged in the battery so as to have contact points: for example in the bent sections of the thin films 8 or in the straight sections of the thin film 8 that are at the bottom or at the bottom of a battery stack 26. This allows the thin films 8 to be in electrical contact with the flexible connecting film 25. For example an anodic circuit (or cathodic circuit) of a thin film may be in electrical contact with an electrical circuit of the flexible connecting film 25, said electrical circuit of the flexible connecting film 25 leading to a main anode connector (respectively cathode connector) of the battery.

The invention is not limited to the specific embodiments herein disclosed as examples. The invention also encompasses other embodiments not herein explicitly described with various combinations of the features herein described.

## Claims

1. Electrical battery (22) comprising:
- at least a battery cell (23) comprising:
• a separator (1),
• an anode (2) having an electrolytic face (5) in contact with the separator (1) and a collecting face (4) opposite its electrolytic face (5),
• a cathode (3) having an electrolytic face (6) in contact with the separator (1) and a collecting face (7) opposite its electrolytic face (6),
• said separator (1) being arranged between the anode (2) and the cathode (3) such that the collecting face (4) of the anode (2) and the collecting face (7) of the cathode (3) are arranged on opposite sides of the separator (1),
- a thin film (8) comprising:
• at least one electrically isolating layer,
• at least one anode contact (12) adapted to electrically contact the anode (2),
• at least one cathode contact (13) adapted to electrically contact the cathode (3),
**characterized in that** the thin film (8) is:
- at least partially flexible,
- bent between the anode contact (12) and the cathode contact (13) so as to ensure an electrical contact simultaneously:
• between the anode contact (12) and the collecting face (4) of the anode (2), and
• between the cathode contact (13) and the collecting face (7) of the cathode (3).

2. Battery according to claim 1, further **characterized in that**:
- the anode contact (12) is configured to form an anode collector of the anode (2), and/or
- the cathode contact (13) is configured to form a cathode collector of the cathode (3).

3. Battery according to one of claim 1 or 2, further **characterized in that** the anode contact (12) and the cathode contact (13) are made of different materials.

4. Battery according to one of claim 1 to 3, further **characterized in that** the thin film (8) comprises:
- a plurality of anode contacts (12),
- a plurality of anode connectors (16),
- a first electrical anodic circuit (14) adapted to conduct electrical charges between a first anode contact and a first anode connector,
- a second electrical anodic circuit (14) adapted to conduct electrical charges between a second anode contact and a second anode connector,
- the second anodic circuit being integrally electrically isolated from the first anodic circuit.

5. Battery according to one of claim 1 to 4, further **characterized in that** the thin film comprises:
- a plurality of cathode contacts (13),
- a plurality of cathode connectors (17),
- a first electrical cathodic circuit (15) adapted to conduct electrical charges between a first cathode contact and a first cathode connector,
- a second electrical cathodic circuit (15) adapted to conduct electrical charges between a second cathode contact and a second cathode connector,
- the second cathodic circuit being integrally electrically isolated from the first cathodic circuit.

6. Battery according to one of claim 4 or 5, further **characterized in that** the anodic circuit (14) and/or the cathodic circuit (15) is printed on the thin film (8).

7. Battery according to one of claim 4 to 6, further **characterized in that** the thickness of the anode contact (12) and/or of the cathode contact (13) is smaller than the thickness of an anodic circuit (14) and/or of a cathodic circuit (15).

8. Battery according to one of claim 1 to 7, further **characterized in that** the thin film (8) comprises a plurality of layers comprising at least a first layer comprising an electrically conductive portion and a second layer comprising an electrically conductive portion.

9. Battery according to claim 8, further **characterized in that** the thin film (8) comprises at least one electrically conductive via crossing through at least one layer, said via being electrically connected to a first electrically conductive portion in a first layer and to a second electrically conductive portion in a second layer.

10. Battery according to one of claim 1 to 9, further **characterized in that** it comprises only one battery cell (23) between two consecutive folds of the thin film (8).

11. Battery according to one of claim 1 to 10, further **characterized in that** the thin film (8) comprises integrated electronics (11).

12. Battery according to one of claim 1 to 11, further **characterized in that**:
- the surface of the anode contact (12) which is in electrical contact with the collecting face (4) of the anode (2), is smaller than the surface of the collecting face of the anode, such that a portion of the collecting face of the anode is in contact with a portion of the thin film (8) different from the anode contact, and/or
- the surface of the cathode contact (13) which is in electrical contact with the collecting face (7) of the cathode (3), is smaller than the surface of the collecting face of the cathode, such that a portion of the collecting face of the cathode is in contact with a portion of the thin film (8) different from the cathode contact.

13. Battery according to one of claim 1 to 12, further **characterized in that** it comprises:
- at least two stacks (26) of battery cells (23), each stack comprising:
• at least two battery cells, and
• a thin film (8),
- a flexible connecting device (25) adapted to be in electrical contact with at least two different thin films (8).

14. Thin film (8) for a battery (22) comprising:
- at least one electrically isolating layer,
- at least one anode contact (12) adapted to electrically contact an anode (2) of a battery cell (23) of the battery (22),
- at least one cathode contact (13) adapted to electrically contact a cathode (3) of a
battery cell (23) of the battery (22),
**characterized in that** it is:
- at least partially flexible,
- adapted to be bent between the anode contact (12) and the cathode contact (13) so as to ensure an electrical contact simultaneously:
• between the anode contact (12) and a collecting face (4) of an anode (2) on a first face of a battery cell (23), and
• between the cathode contact (13) and the collecting face (7) of the cathode (3) of said battery cell (23), the cathode (3) being on a second face opposite the first face of the battery cell (23).

15. Method for the manufacturing of a battery (22) comprising:
- obtaining a battery cell (23) comprising:
• a separator (1),
• an anode (2) having an electrolytic face (5) in contact with the separator (1) and a collecting face (4) opposite its electrolytic face (5),
• a cathode (3) having an electrolytic face (6) in contact with the separator (1) and a collecting face (7) opposite its electrolytic face (6),
• said separator (1) being arranged between the anode (2) and the cathode (3) such that the collecting face (4) of the anode (2) and the collecting face (7) of the cathode (3) are arranged on opposite sides of the separator (1),
- obtaining a thin film (8) comprising:
• at least one electrically isolating layer,
• at least one anode contact (12) adapted to electrically contact the anode (2),
• at least one cathode contact (13) adapted to electrically contact the cathode (3),
**characterized in that** the thin film (8) is:
- made at least partially flexible,
- bent between the anode contact (12) and the cathode contact (13) so as to ensure an electrical contact simultaneously:
• between the anode contact (12) and the collecting face (4) of the anode (2), and
• between the cathode contact (13) and the collecting face (7) of the cathode (3).

16. Method according to claim 15, further comprising depositing at least part of a battery cell (23) on the thin film (8).

17. Method according to any of claims 15 or 16, further comprising attaching a first segment (24) of thin film (8) comprising the anode contact (12) to a second segment (24) of thin film (8) comprising the cathode contact (13).

## Patentansprüche

1. Elektrische Batterie (22), umfassend:
- mindestens eine Batteriezelle (23), umfassend:
• einen Separator (1),
• eine Anode (2) mit einer elektrolytischen Seite (5) in Kontakt mit dem Separator (1) und einer Sammelseite (4) gegenüber ihrer elektrolytischen Seite (5),
• eine Kathode (3) mit einer elektrolytischen Seite (6) in Kontakt mit dem Separator (1) und einer Sammelseite (7) gegenüber ihrer elektrolytischen Seite (6),
• wobei der Separator (1) zwischen der Anode (2) und der Kathode (3) so angeordnet ist, dass die Sammelseite (4) der Anode (2) und die Sammelseite (7) der Kathode (3) an gegenüber liegenden Seiten des Separators (1) angeordnet sind,
- eine Dünnschicht (8), umfassend:
• mindestens eine elektrisch isolierende Schicht,
• mindestens einen Anodenkontakt (12), der zum elektrischen Kontaktieren der Anode (2) eingerichtet ist,
• mindestens einen Kathodenkontakt (13), der zum elektrischen Kontaktieren der Kathode (3) eingerichtet ist,
**dadurch gekennzeichnet, dass** die Dünnschicht (8):
- mindestens teilweise flexibel ist,
- zwischen dem Anodenkontakt (12) und dem Kathodenkontakt (13) so gebogen ist, dass ein gleichzeitiger elektrischer Kontakt
• zwischen dem Anodenkontakt (12) und der Sammelseite (4) der Anode (2) und
• zwischen dem Kathodenkontakt (13) und der Sammelseite (7) der Kathode (3) sichergestellt ist.

2. Batterie nach Anspruch 1, **dadurch gekennzeichnet, dass**:
- der Anodenkontakt (12) ausgestaltet ist, um einen Anodenkollektor der Anode (2) zu bilden, und/oder
- der Kathodenkontakt (13) ausgestaltet ist, um einen Kathodenkollektor der Kathode (3) zu bilden.

3. Batterie nach einem der Ansprüche 1 oder 2, ferner **dadurch gekennzeichnet, dass** der Anodenkontakt (12) und der Kathodenkontakt (13) aus unterschiedlichen Materialien gefertigt sind.

4. Batterie nach einem der Ansprüche 1 bis 3, ferner **dadurch gekennzeichnet, dass** die Dünnschicht (8) umfasst:
- eine Vielzahl von Anodenkontakten (12);
- eine Vielzahl von Anodenverbindern (16);
- eine erste elektrische Anodenschaltung (14), die eingerichtet ist, um elektrische Ladungen zwischen einem ersten Anodenkontakt und einem ersten Anodenverbinder zu leiten,
- eine zweite elektrische Anodenschaltung (14), die eingerichtet ist, um elektrische Ladungen zwischen einem zweiten Anodenkontakt und einem zweiten Anodenverbinder zu leiten,
- wobei die zweite Anodenschaltung integral elektrisch von der ersten Anodenschaltung isoliert ist.

5. Batterie nach einem der Ansprüche 1 bis 4, ferner **dadurch gekennzeichnet, dass** die Dünnschicht umfasst:
- eine Vielzahl von Kathodenkontakten (13);
- eine Vielzahl von Kathodenverbindern (17);
- eine erste elektrische Kathodenschaltung (15), die eingerichtet ist, um elektrische Ladungen zwischen einem ersten Kathodenkontakt und einem ersten Kathodenverbinder zu leiten,
- eine zweite elektrische Kathodenschaltung (15), die eingerichtet ist, um elektrische Ladungen zwischen einem zweiten Kathodenkontakt und einem zweiten Kathodenverbinder zu leiten,
- wobei die zweite Kathodenschaltung integral elektrisch von der ersten Kathodenschaltung isoliert ist.

6. Batterie nach einem der Ansprüche 4 oder 5, ferner **dadurch gekennzeichnet, dass** die Anodenschaltung (14) und/oder die Kathodenschaltung (15) auf die Dünnschicht (8) gedruckt sind.

7. Batterie nach einem der Ansprüche 4 bis 6, ferner **dadurch gekennzeichnet, dass** die Dicke des Anodenkontakts (12) und/oder des Kathodenkontakts (13) kleiner als die Dicke einer Anodenschaltung (14) und/oder einer Kathodenschaltung (15) ist.

8. Batterie nach einem der Ansprüche 1 bis 7, ferner **dadurch gekennzeichnet, dass** die Dünnschicht (8) eine Vielzahl von Schichten umfasst, umfassend mindestens eine erste Schicht, die einen elektrisch leitenden Abschnitt umfasst, und eine zweite Schicht, die einen elektrisch leitenden Abschnitt umfasst.

9. Batterie nach Anspruch 8, ferner **dadurch gekennzeichnet, dass** die Dünnschicht (8) mindestens eine elektrisch leitende Durchkontaktierung aufweist, die mindestens eine Schicht durchquert, wobei die Durchkontaktierung elektrisch mit einem ersten elektrisch leitenden Abschnitt in einer ersten Schicht und mit einem zweiten elektrisch leitenden Abschnitt in einer zweiten Schicht verbunden ist.

10. Batterie nach einem der Ansprüche 1 bis 9, ferner **dadurch gekennzeichnet, dass** sie nur eine Batteriezelle (23) zwischen zwei aufeinander folgenden Faltungen der Dünnschicht (8) umfasst.

11. Batterie nach einem der Ansprüche 1 bis 10, ferner **dadurch gekennzeichnet, dass** die Dünnschicht (8) integrierte Elektronik (11) umfasst.

12. Batterie nach einem der Ansprüche 1 bis 11, ferner **dadurch gekennzeichnet, dass**:
- die Oberfläche des Anodenkontakts (12), die in elektrischem Kontakt mit der Sammelseite (4) der Anode (2) ist, kleiner als die Oberfläche der Sammelseite der Anode ist, so dass ein Abschnitt der Sammelseite der Anode in Kontakt mit einem Abschnitt der Dünnschicht (8) ist, der sich von dem Anodenkontakt unterscheidet, und/oder
- die Oberfläche des Kathodenkontakts (13), die in elektrischem Kontakt mit der Sammelseite (7) der Kathode (3) ist, kleiner als die Oberfläche der Sammelseite der Kathode ist, so dass ein Abschnitt der Sammelseite der Kathode in Kontakt mit einem Abschnitt der Dünnschicht (8) ist, der sich von dem Kathodenkontakt unterscheidet.

13. Batterie nach einem der Ansprüche 1 bis 12, ferner **dadurch gekennzeichnet, dass** sie umfasst:
- mindestens zwei Stapel (26) von Batteriezellen (23), wobei jeder Stapel umfasst:
• mindestens zwei Batteriezellen, und
• eine Dünnschicht (8),
- eine flexible Verbindungsvorrichtung (25), die eingerichtet ist, um in elektrischem Kontakt mit mindestens zwei unterschiedlichen Dünnschichten (8) zu sein.

14. Dünnschicht (8) für eine Batterie (22), umfassend:
- mindestens eine elektrisch isolierende Schicht,
- mindestens einen Anodenkontakt (12), der zum elektrischen Kontaktieren einer Anode (2) einer Batteriezelle (23) der Batterie (22) eingerichtet ist,
- mindestens einen Kathodenkontakt (13), der zum elektrischen Kontaktieren einer Kathode (3) einer Batteriezelle (23) der Batterie (22) eingerichtet ist,
**dadurch gekennzeichnet, dass** sie
- mindestens teilweise flexibel ist,
- eingerichtet ist, um zwischen dem Anodenkontakt (12) und dem Kathodenkontakt (13) gebogen zu werden, so dass ein gleichzeitiger elektrischer Kontakt
• zwischen dem Anodenkontakt (12) und einer Sammelseite (4) einer Anode (2) auf einer ersten Seite einer Batteriezelle (23) und
• zwischen dem Kathodenkontakt (13) und der Sammelseite (7) der Kathode (3) der Batteriezelle (23) gewährleistet ist, wobei sich die Kathode (3) auf einer zweiten Seite gegenüber der ersten Seite der Batteriezelle (23) befindet.

15. Verfahren zur Herstellung einer Batterie (22), umfassend:
- Erhalten einer Batteriezelle (23), umfassend:
• einen Separator (1),
• eine Anode (2) mit einer elektrolytischen Seite (5) in Kontakt mit dem Separator (1) und einer Sammelseite (4) gegenüber ihrer elektrolytischen Seite (5),
• eine Kathode (3) mit einer elektrolytischen Seite (6) in Kontakt mit dem Separator (1) und einer Sammelseite (7) gegenüber ihrer elektrolytischen Seite (6),
• wobei der Separator (1) zwischen der Anode (2) und der Kathode (3) so angeordnet ist, dass die Sammelseite (4) der Anode (2) und die Sammelseite (7) der Kathode (3) an gegenüber liegenden Seiten des Separators (1) angeordnet sind,
- Erhalten einer Dünnschicht (8), umfassend:
• mindestens eine elektrisch isolierende Schicht,
• mindestens einen Anodenkontakt (12), der zum elektrischen Kontaktieren der Anode (2) eingerichtet ist,
• mindestens einen Kathodenkontakt (13), der zum elektrischen Kontaktieren der Kathode (3) eingerichtet ist,
**dadurch gekennzeichnet, dass** die Dünnschicht (8):
- so gefertigt ist, dass sie mindestens teilweise flexibel ist,
- zwischen dem Anodenkontakt (12) und dem Kathodenkontakt (13) so gebogen ist, dass ein gleichzeitiger elektrischer Kontakt
• zwischen dem Anodenkontakt (12) und der Sammelseite (4) der Anode (2) und
• zwischen dem Kathodenkontakt (13) und der Sammelseite (7) der Kathode (3) sichergestellt ist.

16. Verfahren nach Anspruch 15, ferner umfassend Abscheiden mindestens eines Teils einer Batteriezelle (23) auf der Dünnschicht (8).

17. Verfahren nach einem der Ansprüche 15 oder 16, ferner umfassend Befestigen eines ersten Segments (24) der Dünnschicht (8), das den Anodenkontakt (12) umfasst, an einem zweiten Segment (24) der Dünnschicht (8), das den Kathodenkontakt (13) umfasst.

## Revendications

1. Batterie électrique (22) comprenant :
- au moins un élément de batterie (23) comprenant :
• un séparateur (1),
• une anode (2) possédant une face électrolytique (5) en contact avec le séparateur (1) et une face de collecte (4) en regard de sa face électrolytique (5),
• une cathode (3) possédant une face électrolytique (6) en contact avec le séparateur (1) et une face de collecte (7) en regard de sa face électrolytique (6),
• ledit séparateur (1) étant agencé entre l'anode (2) et la cathode (3) de sorte que la face de collecte (4) de l'anode (2) et la face de collecte (7) de la cathode (3) soient agencées sur des côtés opposés du séparateur (1),
- une couche mince (8) comprenant :
• au moins une couche d'isolation électrique,
• au moins un contact (12) d'anode conçu pour entrer en contact électrique avec l'anode (2),
• au moins un contact (13) de cathode conçu pour entrer en contact électrique avec la cathode (3),
**caractérisée en ce que** la couche mince (8) est :
- au moins partiellement souple,
- courbée entre le contact (12) d'anode et le contact (13) de cathode de façon à garantir un contact électrique simultanément :
• entre le contact (12) de cathode et la face de collecte (4) de l'anode (2), et
• entre le contact (13) de cathode et la face de collecte (7) de la cathode (3).

2. Batterie selon la revendication 1, **caractérisée en outre en ce que** :
- le contact (12) d'anode est conçu pour former un collecteur anodique de l'anode (2), et/ou
- le contact (13) de cathode est conçu pour former un collecteur cathodique de la cathode (3).

3. Batterie selon l'une des revendications 1 et 2, **caractérisée en outre en ce que** le contact (12) d'anode et le contact (13) de cathode sont composés de différents matériaux.

4. Batterie selon l'une des revendications 1 à 3, **caractérisée en outre en ce que** la couche mince (8) comporte :
- une pluralité de contacts (12) d'anode,
- une pluralité de connecteurs (16) d'anode,
- un premier circuit anodique électrique (14) conçu pour acheminer des charges électriques entre un premier contact d'anode et un premier connecteur d'anode,
- un second circuit anodique électrique (14) conçu pour acheminer des charges électriques entre un second contact d'anode et un second connecteur d'anode,
- le second circuit anodique étant entièrement isolé électriquement du premier circuit anodique.

5. Batterie selon l'une des revendications 1 à 4, **caractérisée en outre en ce que** la couche mince comporte :
- une pluralité de contacts (13) de cathode,
- une pluralité de connecteurs (17) de cathode,
- un premier circuit cathodique électrique (15) conçu pour acheminer des charges électriques entre un premier contact de cathode et un premier connecteur de cathode,
- un second circuit cathodique électrique (15) conçu pour acheminer des charges électriques entre un second contact de cathode et un second connecteur de cathode,
- le second circuit cathodique étant entièrement isolé électriquement du premier circuit cathodique.

6. Batterie selon l'une des revendications 4 et 5, **caractérisée en outre en ce que** le circuit anodique (14) et/ou le circuit cathodique (15) sont imprimés sur la couche mince (8).

7. Batterie selon l'une des revendications 4 à 6, **caractérisée en outre en ce que** l'épaisseur du contact (12) d'anode et/ou du contact (13) de cathode est inférieure à l'épaisseur d'un circuit anodique (14) et/ou d'un circuit cathodique (15).

8. Batterie selon l'une des revendications 1 à 7, **caractérisée en outre en ce que** la couche mince (8) comprend une pluralité de couches comprenant au moins une première couche comprenant une partie électroconductrice et une seconde couche comprenant une partie électroconductrice.

9. Batterie selon la revendication 8, **caractérisée en outre en ce que** la couche mince (8) comprend au moins un trou métallisé électroconducteur passant à travers au moins une couche, ledit trou métallisé étant connecté électriquement à une première partie électroconductrice dans une première couche et à une seconde partie électroconductrice dans une seconde couche.

10. Batterie selon l'une des revendications 1 à 9, **caractérisée en outre en ce qu'**elle comprend uniquement un élément de batterie (23) entre deux plis consécutifs de la couche mince (8).

11. Batterie selon l'une des revendications 1 à 10, **caractérisée en outre en ce que** la couche mince (8) comprend des circuits électroniques intégrés (11).

12. Batterie selon l'une des revendications 1 à 11, **caractérisée en outre en ce que** :
- la surface du contact (12) d'anode qui est en contact électrique avec la face de collecte (4) de l'anode (2) est plus petite que la surface de la face de collecte de l'anode, de sorte qu'une partie de la face de collecte de l'anode soit en contact avec une partie de la couche mince (8) différente du contact d'anode, et/ou
- la surface du contact (13) de cathode qui est en contact électrique avec la face de collecte (7) de la cathode (3) est plus petite que la surface de la face de collecte de la cathode, de sorte qu'une partie de la face de collecte de la cathode soit en contact avec une partie de la couche mince (8) différente du contact de cathode.

13. Batterie selon l'une des revendications 1 à 12, **caractérisée en outre en ce qu'**elle comprend :
- au moins deux empilements (26) d'éléments de batterie (23), chaque empilement comprenant :
• au moins deux éléments de batterie, et
• une couche mince (8),
- un dispositif de connexion flexible (25) conçu pour être en contact électrique avec au moins deux couches minces (8) différentes.

14. Couche mince (8) pour une batterie (22) comprenant :
- au moins une couche d'isolation électrique,
- au moins un contact (12) d'anode conçu pour entrer en contact électrique avec une anode (2) d'un élément de batterie (23) de la batterie (22),
- au moins un contact (13) de cathode conçu pour entrer en contact électrique avec une cathode (3) d'un élément de batterie (23) de la batterie (22),
**caractérisée en ce qu'**elle est :
- au moins partiellement souple,
- conçue pour être courbée entre le contact (12) d'anode et le contact (13) de cathode de façon à garantir un contact électrique simultanément :
• entre le contact (12) d'anode et une face de collecte (4) d'une anode (2) sur une première face d'un élément de batterie (23), et
• entre le contact (13) de cathode et la face de collecte (7) de la cathode (3) dudit élément de batterie (23), la cathode (3) étant sur une seconde face en regard de la première face de l'élément de batterie (23).

15. Procédé pour la fabrication d'une batterie (22) consistant à :
- obtenir un élément de batterie (23) comprenant :
• un séparateur (1),
• une anode (2) possédant une face électrolytique (5) en contact avec le séparateur (1) et une face de collecte (4) en regard de sa face électrolytique (5),
• une cathode (3) possédant une face électrolytique (6) en contact avec le séparateur (1) et une face de collecte (7) en regard de sa face électrolytique (6),
• ledit séparateur (1) étant agencé entre l'anode (2) et la cathode (3) de sorte que la face de collecte (4) de l'anode (2) et la face de collecte (7) de la cathode (3) soient agencées sur des côtés opposés du séparateur (1),
- obtenir une couche mince (8) comprenant :
• au moins une couche d'isolation électrique,
• au moins un contact (12) d'anode conçu pour entrer en contact électrique avec l'anode (2),
• au moins un contact (13) de cathode conçu pour entrer en contact électrique avec la cathode (3),
**caractérisée en ce que** la couche mince (8) est :
- faite au moins partiellement souple,
- courbée entre le contact (12) d'anode et le contact (13) de cathode de façon à garantir un contact électrique simultanément :
• entre le contact (12) d'anode et la face de collecte (4) de l'anode (2), et
• entre le contact (13) de cathode et la face de collecte (7) de la cathode (3).

16. Procédé selon la revendication 15, consistant en outre à déposer au moins une partie d'un élément de batterie (23) sur la couche mince (8).

17. Procédé selon l'une quelconque des revendications 15 et 16, consistant en outre à fixer un premier segment (24) de couche mince (8) comprenant le contact (12) d'anode à un second segment (24) de couche mince (8) comprenant le contact (13) de cathode.
